# EUROPÄISCHE PATENTSCHRIFT

(11) **EP 3 108 776 B1**
(45) Veröffentlichungstag und Bekanntmachung des Hinweises auf die Patenterteilung: **18.04.2018**
(21) Anmeldenummer: 16175370.2
(22) Anmeldetag: 21.06.2016
(51) Int. Cl.: A47J 31/36, A47J 31/40, A47J 31/42, A47J 31/52

(54) **VERFAHREN ZUM ERZEUGEN EINES KAFFEEGETRÄNKS**
METHOD FOR CREATING A COFFEE DRINK
PROCÉDÉ DE GÉNÉRATION D'UN BOISSON AU CAFÉ

(30) Priorität: 22.06.2015 DE 102015109921
(43) Veröffentlichungstag der Anmeldung: 28.12.2016
(73) Patentinhaber: Melitta Professional Coffee Solutions GmbH & Co. KG, 32429 Minden (DE)
(72) Erfinder: DIESTER, Thomas, 31675 Bückeburg (DE); HALLMANN, Kai, 32423 Minden (DE); BUCHHOLZ, Bernd, 32369 Rahden (DE)
(74) Vertreter: Specht, Peter

(56) Entgegenhaltungen:
- EP-A2- 1 902 653
- WO-A1-2011/045055
- DE-A1- 19 629 239

## Beschreibung

Die Erfindung betrifft ein Verfahren zum Erzeugen eines Kaffeegetränks.

Frische Kaffeegetränke sind auf verschiedene Weise erzeugbar, so mittels Kolbenmaschinen (so genannte Spezialitätenmaschinen). Bei Kolbenmaschinen wird die gesamte Kaffee- bzw. Getränkemenge mit einem hohem Druck durch eine Brüheinheit geleitet

Zum technologischen Hintergrund werden die DE 36 07 656 C2, die DE 10 2004 056 224 A1, die DE 10 2009 012 970 A1, die EP 1968 419 B1, die EP 1 902 653 A2 und die WO 2011/045055A1 genannt.

Bekannt ist insofern aus der WO2011/045055 A1 ein Verfahren zum Erzeugen eines Kaffeegetränks aus einer vorgegebenen Menge Kaffeemehls, mittels eines Brühvorganges an einer Kaffeemaschine mit einer Steuerungsvorrichtung sowie mit einem Brühzylinder, in dem ein Kolben beweglich angeordnet ist, der einen Kolbenantrieb aufweist, so dass das Volumen einer Brühkammer und damit der Druck auf innerhalb der Brühkammer befindliche Stoffe veränderlich ist, wobei der Brühvorgang zumindest folgende Verfahrensschritte aufweist:
- es wird eine Menge an Kaffeemehl wird in die Brühkammer eingefüllt;
- durch das in die Brühkammer gefüllte Kaffeemehl wird Wasser geleitet, um Kaffee zu brühen, wobei ein Volumenstrom, insbesondere der Volumenstrom des durch die Brühkammer fließenden Wassers, als Regelgröße ermittelt und mit einem Volumenstromsollwert verglichen wird;
- bei einem Erreichen eines Sollvolumens an gebrühtem Kaffeegetränk wird der Brühvorgang beendet.

Aus der EP 1 902 653 A2 ist eine Kaffeemaschine bekannt, die eine an eine Heißwasserzuführung angeschlossene Brüheinheit mit einer beim Brühvorgang das gemahlene Kaffeepulver aufnehmenden Brühkammer aufweist. Ferner verfügt die Kaffeemaschine über eine Kaffeeauslaufleitung, in die ein Crema-Ventil eingeschaltet ist. Ferner umfasst die Kaffeemaschine eine elektromotorisch betriebene Pumpe zum Fördern des der Brüheinheit zuzuführenden Heißwassers, wobei die Leistung der Pumpe zum Bereiten eines Espressokaffees ausgelegt ist. Die Kaffeemaschine weist ferner Einrichtungen oder Mittel zum einmaligen Erfassen des bei einem Brühvorgang dem der Brühkammer zuzuführenden Heißwasser durch das in die Brühkammer befindliche Kaffeepulver entgegenwirkenden Gegendrucks auf, um einmalig in Abhängigkeit von der Körnung des Kaffees eine Einstellung des Brühvorganges durch eine einmalige Aktorenansteuerung vorzunehmen. Bekannt ist aus der DE 196 29 239 A1 ein Verfahren zum Erzeugen eines Kaffeegetränks in einer Brühkammer mit Kolben. Um den Brühprozess zu optimieren, wird der Volumenstrom an austretendem Kaffee gemessen. Der Volumenstrom soll von einem Brühvorgang zum nächsten Brühvorgang möglichst gleich gehalten werden. Wenn bei einem Brühvorgang also eine Abweichung vom gewünschten Wert des Volumenstroms festgestellt wird, dann wird für den nächsten Brühvorgang eine entsprechende Korrektur vorgenommen. Dabei wird der Anpressdruck bzw. die Kolbenposition als Stellgröße verwendet, um den Volumenstrom zu beeinflussen. Wenn der Kolben in der Brühkammer verschoben wird, wird der Druck auf das Kaffeemehl in der Brühkammer entweder verringert oder vergrössert, hierdurch wird der Wasservolumenstrom in der Brühkammer größer oder kleiner. Die bekannten Verfahren haben sich an sich bewährt, wünschenswert ist aber eine weitere Optimierung des Geschmacks und des Aromas des Kaffeegetränks. Insbesondere ergibt sich durch einen nachlassenden Volumenstrom durch die Brühkammer insbesondere in der zeitlich zweiten Hälfte des Brühprozesses eine Beeinträchtigung des Geschmacks des Kaffeegetränks.

Die Aufgabe der vorliegenden Erfindung ist es, dieses Problem zu lösen.

Die Aufgabe wird durch ein Verfahren mit den Merkmalen des Anspruchs 1 gelöst.

Geschaffen wird ein Verfahren zum Erzeugen eines Kaffeegetränks aus einer vorgegebenen Menge Kaffeemehls, mittels eines Brühvorganges an einer Kaffeemaschine der eingangs angegebenen Art, wobei der Brühvorgang zumindest folgende Verfahrensschritte aufweist:
S1: es wird eine Menge an Kaffeemehl in die Brühkammer eingefüllt;
S2: durch das in die Brühkammer gefüllte Kaffeemehl wird Wasser geleitet, um Kaffee zu brühen, wobei ein Volumenstrom, insbesondere der Volumenstrom des durch die Brühkammer fließenden Wassers, als Regelgröße ermittelt und mit einem Volumenstromsollwert verglichen wird; und
S3: bei Abweichungen von einem vorgegebenen Volumenstromsollwert wird die Position des Kolbens in der Brühkammer als Stellgröße regelnd geändert.

Dabei werden die Schritte S2 und S3 fortwährend während des jeweiligen Brühvorganges wiederholt durchlaufen, also wenigstens zweifach oder mehrfach ausgeführt je Brühprozess. Dies bezieht sich auf die Teile, dass ein Volumenstrom, insbesondere der Volumenstrom des durch die Brühkammer fließenden Wassers, als Regelgröße ermittelt und mit einem Volumenstromsollwert verglichen wird; und dass bei Abweichungen von einem vorgegebenen Volumenstromsollwert wird die Position des Kolbens in der Brühkammer als Stellgröße regelnd geändert wird.

Damit wird eine echte Regelung realisiert, mit welcher der Brühvorgang hervorragend positiv beeinflusst werden kann. wobei ein Volumenstrom, insbesondere der Volumenstrom des durch die Brühkammer fließenden Wassers, als Regelgröße ermittelt und mit einem Volumenstromsollwert verglichen wird; und

Vorzugsweise wird in einem Schritt S4 bei Erreichen eines Sollvolumens an gebrühtem Kaffeegetränk der Brühvorgang beendet.

Erfindungsgemäß wird somit der Volumenstrom geregelt, insbesondere der Kaffeeauslaufvolumenstrom, was zu einer Optimierung des Kaffeegeschmacks und/oder -aromas führt, denn es wird eine Beeinträchtigung des Kaffeegeschmacks und- aromas durch einen verringerten Durchflussstrom insbesondere in der zeitlich zweiten Hälfte des Brühprozesses vermieden. Die Erfindung löst somit auch die Aufgabe, ein Verfahren zur Erzeugung eines Kaffeegetränks zu schaffen, bei dem das Extraktionsverhalten während der Zubereitung optimiert und die Qualität des Kaffeegetränks verbessert ist.

Die Position des Kolbens bestimmt den auf das Kaffeemehl bzw. auf das in der Brühkammer befindliche Kaffeemehl-/Wassergemisch wirkenden Druck. Durch Veränderung der Position des Kolbens können die Größe der Brühkammer und damit der Druck auf das in der Brühkammer befindliche Kaffeemehl-/Wassergemisch besonders einfach und präzise eingestellt und verändert werden.

Vorzugsweise ist vorgesehen, dass während des Brühvorgangs eine Regelung des Volumenstroms derart erfolgt, dass der Volumenstrom während des gesamten Brühvorgangs konstant gehalten wird. Konstant bedeutet, dass sich der Volumenstrom um nicht mehr als ... Prozent während des Brühvorgangs verändert. Von daher ist bevorzugt, den Volumenstrom für jedes Kaffeegetränke (Espresso, Café Crème usw.) als Konstante zu hinterlegen und durch eine Einflussnahme auf die Kolbenposition den Auslaufvolumenstrom zu beeinflussen. Denkbar ist es aber auch, den Volumenstrom stufenweise zu verändern oder aber sogar gegen Ende des Brühvorganges geeignet zu verändern, beispielsweise zu erhöhen, um den Kaffeegeschmack in einer gewünschten Weise zu beeinflussen.

Zur Realisierung es erfindungsgemäßen Verfahrens ist eine Messung und kontinuierliche Beeinflussung des Volumenstroms während des Brühprozesses vorteilhaft.

Nach einer bevorzugten Ausgestaltung wird die Regelgröße Volumenstrom mit Hilfe eines Flügelradzählers als Messeinrichtung bestimmt. Ein Flügelradzähler ist kostengünstig und weist für die Zwecke der hier erforderlichen Regelung eine genügende Genauigkeit auf. Der Flügelradzähler ist vorzugsweise der Brühkammer vorgeschaltet, insbesondere im Wasserzulauf zur Brühkammer angeordnet. Als Stellglied wird hingegen vorzugsweise die Position des Kolbens benutzt. Wird die Presskraft zur Positionsbestimmung berechnet, ist es vorteilhaft, in die Bestimmung der einzustellenden Kolbenposition auch die Eigenschaft des Kaffeemehls einzubeziehen. Daher kann die Regelung in Abhängigkeit von Mahlleistung und der Bohnensorte kalibriert werden. Hierdurch kann besonders einfach im späteren Begriff eine mahlgrad- und temperaturunabhängige ... konstante Auflaufzeit sichergestellt werden, was wiederum zu einer Optimierung des Geschmacks des Kaffeegetränks vorteilhaft beiträgt.

Im Versuch hat sich beispielsweise ergeben, dass für eine getestete Kaffeesorte eine konstante Ausgabegeschwindigkeit (bei einer Zubereitung von Espresso als Kaffeegetränk) von ca. 3 bis 4 ml/sec besonders vorteilhaft ist. Während der Zubereitung einer Kaffeecreme eine Ausgabegeschwindigkeit zwischen und 18 und 20 ml/sec.

Es ist denkbar, für jede Kaffeesorte eine eigene Ausgabegeschwindigkeit bzw. einen eigenen Volumenstrom in einer Datenbank bzw. einem Speicher der Rechnereinheit zu hinterlegen.

So können z.B. für Doppelkannen und Mischprodukte verschiedene Volumenströme als ideal definiert und hinterlegt werden. Ebenso ist die Definition vom Sollprofilverlauf von verschiedenen Volumenstromgrößen für verschiedene Produktarten vorstellbar, die sich durch einen besonders positiven Einfluss auf die Kaffeequalität auszeichnen.

Ergänzend realisierbar ist eine Kombination des erfindungsgemäßen Verfahrens mit einer automatischen und mahlgradunabhängigen Einstellung der Mahlleistung, um diesen Einflussparameter konstant zu halten. Denkbar ist aber auch eine automatische Mahlgradanpassung.

Denkbar ist es auch, eine Kuchenhöhenmessung innerhalb der Brüheinheit vorzunehmen. Dabei werden die Einwaage und der Mahlgrad der Mühle bestimmt und es wird der Verfahrweg des Kolbens bzw. über die vom Motor bzw. Kolbenantrieb ausgegebenen Impulse gemessen. Auf diese Weise und einen entsprechenden Vergleich lassen sich somit Rückschlüsse von der Kaffeekuchenhöhe auf die Mahlleistung der Mühle ziehen, was eine automatische Ermittlung und Kontrolle dieser Parameter ermöglicht. Des Weiteren ist denkbar, derart eine Vereinfachung der Mühleneinstellung bzw. -ansteuerung zu erzielen.

Ein Problem einer Mahlgradanpassung ist eine indirekte, nachträgliche und somit träge Reaktion auf Systemvariablen. Es kann aber andererseits über den Mahlgrad ein starker Einfluss auf den Widerstand und somit den Auslaufvolumenstrom erzielt werden. Dieser Einfluss kann genutzt werden, in einer Kombination der Systeme den Qualitätsregelkreis automatisch in einen optimalen Stellbereich zu bringen, um z.B. auf drastische Änderungen der Bedingungen (Wechsel der Bohnensorte) zu reagieren.

Es ist ferner denkbar, für jeden Kunden einzeln eine Differenzierung des Systems vorzunehmen. Hierzu können kundenspezifische Rahmenbedingungen ermittelt und gespeichert werden (z.B. Bohnensorte, Einwaage, Wassermenge und Auslaufzeit). Sodann wird der Mahlgrad für die bevorzugten Bohnen und Referenzprodukte (Espresso und Kaffeecreme) ermittelt und im Speicher hinterlegt. Dies kann durch eine Messung der Kuchenhöhe in der Brühkammer sowie eines Auslaufvolumenstroms über einen Flügelradzähler erfolgen.

Falls der Volumenstrom wiederholt außerhalb eines vorgegebenen Rahmens liegt, wird eine Mahlgradanpassung eingeleitet. Diese Anpassung kann entweder während des laufenden Mahlvorgangs einer Produktherstellung oder als separate Referenzierung und als eigenständiger Prozess stattfinden. Ziel ist es bei dieser Variante der Erfindung, über eine ergänzende Anpassung des Mahlgrads den Volumenstrom wieder in einen Bereich zu bringen, in dem die Presskräfte zur Regelung nutzbar sind.

Kombiniert wird das erfindungsgemäße Verfahren somit vorzugsweise mit einer automatischen Einwaageregelung zur Bestimmung, Beeinflussung und Regelung der Mahlmenge.

Ebenfalls bevorzugt wird das erfindungsgemäße Verfahren ergänzt durch eine automatische Mahlgradanpassung zur Justierung der Stellgröße des Regelkreises in einen optimalen Funktionsbereich.

Ebenfalls bevorzugt ist das Ermitteln bzw. Vorgeben und Verwalten von produktbezogenen Soll-Profil-Volumenstrom und das Herstellen von konstanten Auslauf-Volumenströmen.

Vorzugsweise wird das System auch genutzt, um Druckschwankungen im System auszugleichen.

Vorteilhafte Ausgestaltungen und Weiterbildungen des erfindungsgemäßen Verfahrens sind in den Unteransprüchen angegeben.

Die Erfindung wird nun anhand von Ausführungsbeispielen mit Bezug auf die beigefügten Zeichnungen näher erläutert. Hierbei zeigt:
- Fig. 1: ein schematisches Blockschaltbild eines Ausführungsbeispiels einer erfindungsgemäßen Kaffeemaschine; und
- Fig. 2: ein Flussdiagramm eines Ausführungsbeispiels eines erfindungsgemäßen Verfahrens.

Gleiche Bauelemente bzw. Funktionseinheiten mit gleicher Funktion sind mit gleichen Bezugszeichen in den Figuren gekennzeichnet.

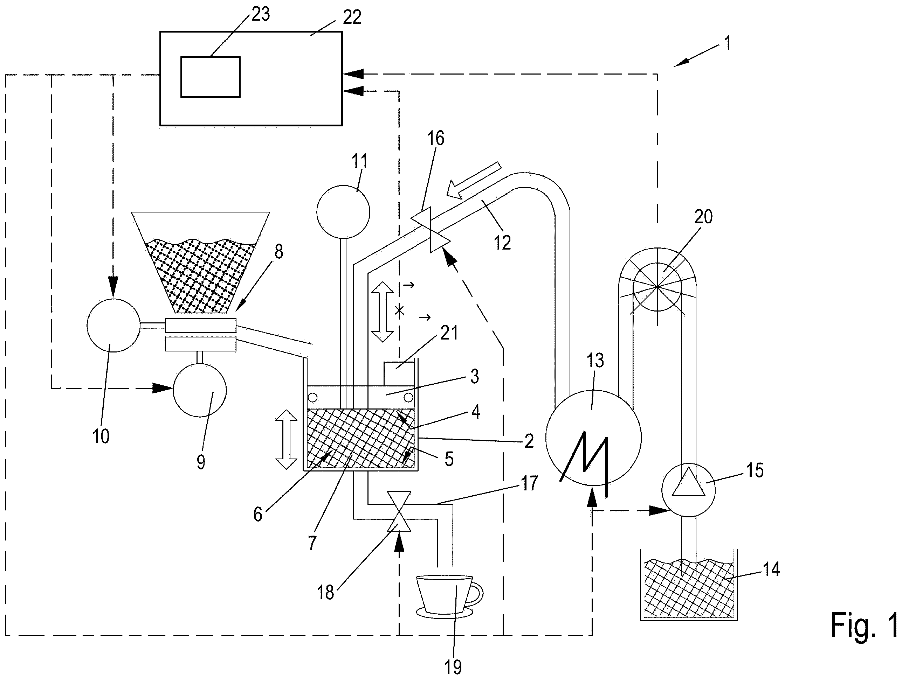

In Fig. 1 ist ein schematisches Blockschaltbild eines Ausführungsbeispiels einer erfindungsgemäßen Kaffeemaschine 1 dargestellt, die als Vollautomat bzw. als Kolbenmaschine ausgebildet ist.

Die Kaffeemaschine 1 weist eine Brühgruppe mit einem Brühzylinder 2 (mit einem darin beweglich angeordneten Kolben 3 als Auspresseinrichtung auf. Zwischen einer Endfläche 4 des Kolbens 3 und einer dieser Endfläche 4 gegenüber liegenden Endfläche 5 des Brühzylinders 2 ist die eigentliche Brühkammer 6 ausgebildet.

Die Brühkammer 6 ist mit Kaffeemehl 7 befüllbar. Dieses Kaffeemehl 7 ist vorzugsweise aus einer Mühle 8 nach einem Zermahlen von Kaffeebohnen zuführbar. Die Mühle 8 ist mit einem Antrieb 9 für ein Mahlwerk sowie vorzugsweise mit einer Mahlgradverstellung 10 versehen. Das Kaffeemehl 7 kann auch auf andere Weise einfüllbar sein, beispielsweise in Form von Filterpapier umgebenen Portionen, die in die Brühkammer 6 einlegbar sind.

Mit dem Kolben 3 kann Druck auf das in die Brühkammer 6 gefüllte Kaffeemehl ausgeübt werden, so dass es zusammengepresst wird. Die Anpresskraft des Kolbens 3 kann mit Hilfe eines Kolbenantriebs 11, insbesondere eines Linearantriebs, variiert werden, der mit dem Kolben 3 gekoppelt ist, denn mit dem Kolbenantrieb 11 kann der Kolben 3 bewegt werden, und zwar insbesondere linear (Richtung X) axial im Brühzylinder 2 vor- und zurück, so dass die Größe der Brühkammer 6 und damit der Druck auf die in der Brühkammer 6 befindlichen Stoffe verändert wird.

An die Brühkammer 6 ist ferner wenigstens eine Heißwassereinheit angeschlossen. Diese Heißwassereinheit weist eine an die Brühkammer angeschlossene Wasserzuleitung 12 auf, die mit einem Heißwasserbereiter (Kessel oder Durchlauferhitzer oder dgl.)) 13 verbunden ist. Durch den Heißwasserbereiter 13 kann Wasser aus einer Leitung oder einem Behälter 14 mittels einer Pumpe 15 in die Brühkammer 6 geleitet und durch diese hindurch gepresst werden. Vorzugsweise wird das Heißwasser durch eine Öffnung des Kolbens 3 in die Brühkammer 6 gepresst. Dabei ist hier in die Wasserzuleitung 12 ein Heißwasserventil bzw. Brühventil 16 geschaltet. In der Brühkammer 6 erfolgt bei einer Zuführung von Heißwasser in das Kaffeemehl 7 die eigentliche Kaffeegetränkzubereitung.

Der Brühzylinder 2 ist im Bereich seiner Endfläche 5, die auch die Brühkammer 6 begrenzt, als Sieb ausgebildet. Der aus dem Sieb der Brühkammer 6 austretende Kaffee wird durch eine einer Auslassleitung 17 in die ein Auslassventil 18 geschaltet ist, in ein Gefäß, insbesondere eine Tasse 19, gefüllt.

Das pro Zeiteinheit durch die Pumpe 14 geförderte bzw. durchgeleitete Wasservolumen - also der Volumenstrom - ist mit wenigstens einer Messeinrichtung 20 messbar, die hier in bevorzugter Ausgestaltung als Flügelradzähler 20 ausgebildet ist. Dieser Volumenstrom entspricht im Wesentlichen dem Volumenstrom des aus der Brühkammer ausfließenden Kaffeegetränks.

Es ist vorzugsweise wenigstens eine Einrichtung zur Positionserfassung oder - ermittlung des Kolbens 3 vorgesehen, die als Wegsensor 21 oder auf andere Weise ausgebildet sein kann, so als Einrichtung zur Positionsermittlung aus einer Schrittzahl eines Schrittmotors als Kolbenantrieb 11.

Gesteuert und geregelt wird der Betrieb der Kaffeemaschine von einer Steuerungseinrichtung 22, die ein Benutzerinterface 23 aufweist, insbesondere eine Eingabevorrichtung zur Eingabe von Daten und eine Ausgabevorrichtung zur Ausgabe, insbesondere Anzeige von Informationen. Auf dieser Steuerungseinrichtung 22 läuft ein Steuerungs- und Regelprogramm ab. In der Steuerungsvorrichtung sind eines oder vorzugsweise mehrere (von einem Benutzer wählbare) Profile gespeichert, die jeweils einem zuzubereitenden Kaffeegetränk entsprechen. Für jedes Kaffeegetränk sind zumindest die Menge an in die Brühkammer zu gebendem Kaffeemehl und das für das ausgewählte Kaffeegetränk durch die Brühkammer zu leitende Wasservolumen vorgespeichert. Weitere vorgespeicherte Parameter sind vorzugweise einer oder mehrere folgender Parameter: Mahlgrad, Wassertemperatur, ggf. zuzusetzende Kaltwassermenge usw.

Die Steuerungsvorrichtung 22 ist vorzugsweise mit sämtlichen oder jedenfalls sämtlichen wesentlichen elektrisch ansteuerbaren und/oder auswertbaren Bauelementen der Kaffeemaschine verbunden). Als Eingabeinformationen stehen insbesondere eine Volumenstrominformation und eine Kolbenpositionsinformation an der Steuerungsvorrichtung 22 bereit. Zudem steht an der Steuerungsvorrichtung 22 eine Information über die in die Brühkammer eingefüllte Kaffeemenge bereit. Vorzugsweise ist ferner der Mahlgrad des Kaffeemehls an der Steuerungsvorrichtung bekannt. Ebenfalls vorzugsweise ist die Wassertemperatur bekannt, so aus abzufragenden Sensoren (die hier nicht vollständig dargestellt sind) oder als Information aus einer Steuerungsvorgabe an die entsprechenden Einheiten.

Es wird nun beispielhaft die Zubereitung eines Kaffeegetränks beschrieben.

Zur Zubereitung eines Kaffeegetränks wird zunächst eine gewünschte Menge Kaffeemehl 7 aus der Mühle oder einer sonstigen Vorratseinrichtung in die Brühkammer 6 befördert. Dazu wird die Mühle 8 mit der Steuereinrichtung 22 angesteuert, insbesondere unter Ansteuerung der Mahlgradverstellung und des Mühlenantriebs 9.

Sobald die Brühkammer 6 mit einer gewünschten Menge an Kaffeemehl befüllt ist, wird der Kolben 3 in eine gewünschte Ausgangsstellung für den Brühprozess gestellt bzw. gefahren. Dazu wird der Kolbenantrieb 11 von der Steuerungseinrichtung 22 angesteuert. Sodann wird in der Brühkammer 6 ein Kaffee zubereitet und aus dieser ausgegeben, indem Wasser durch das Kaffeemehl geleitet wird. Dazu werden von der Steuerungseinrichtung 22 zumindest das Brühventil 16 und die Pumpe 15 angesteuert sowie vorzugsweise der Heißwasserbereiter 13 und das Auslassventil 18, das geöffnet wird.

Das Brühen erfolgt während eines vorgebbaren Zeitabschnitts, gesteuert durch die Steuereinrichtung 22, der ferner jeweils die von der Volumenmesseinrichtung 20 zugeleiteten Information über das Durchlaufvolumen/ pro Zeiteinheit an der Messeinrichtung zugeleitet werden.

Nach Durchlauf einer vorgegebenen Menge an Wasser durch die Brühkammer 7 wird der Brühprozess beendet.

Um den Brühprozess zu optimieren, ist vorgesehen, den Volumenstrom an austretendem Kaffee, der im Wesentlichen bzw. fast dem Volumenstrom an Wasser an der Messeinrichtung entspricht, fortlaufend während des Brühvorganges (wiederholt) zu regeln. Insbesondere wird dieser Volumenstrom, konstant gehalten. Dabei wird vorzugsweise die Kolbenposition als die Stellgröße verwendet, um den Volumenstrom zu regeln bzw. zu beeinflussen.

Die Regelung erfolgt insofern durch Veränderung bzw. geeignete Einstellung der Position des Kolbens 3 im Brühzylinder 2. Veränderbar ist die Position des Kolbens 3 über ein Ansteuern des Kolbenantriebs 11.

Denn wird während eines Brühprozesses die Kolbenposition nicht verändert, verändert sich dennoch das Volumen des pro Zeiteinheit durch die Brühkammer fließenden Wassers, da sich die Eigenschaften des Kaffeemehls 7 in der Brühkammer 6 im Verlaufe des Brühprozesses ändern. Hierdurch wird der Durchflusswiderstand für das Wasser, das die Brühkammer 6 während des Brühvorganges durchfließt, im zeitlichen Verlauf des Brühvorganges größer, so dass bei konstanter Position des Kolbens 3 das pro Zeiteinheit durch die Brühkammer 6 fließende Wasservolumen kleiner wird.

Nach der Erkenntnis der Erfindung ist es vorteilhaft, insbesondere diesem Effekt entgegenzuwirken. Dies wird auf einfache Weise dadurch erreicht, dass die Istgröße "Volumenstrom" ermittelt wird und als Regelgröße verwendet wird. Die Stellgröße ist dabei die Kolbenposition des Kolbens 3 in der Brühkammer 6.

Die Regelung kann wie folgt erfolgen. Sobald ein in der Steuerungsvorrichtung (vorzugsweise in Abhängigkeit von einem vorgespeicherten Profil) gespeicherter Grenzwert für den durch die Brühkammer 6 fließenden und an der Messeinrichtung 20 erfassten Volumenstrom (Volumen pro Zeiteinheit) einen Grenzwert überscheitet, wird der Kolben 3 in der Brühkammer 6 ein Stück zurückgezogen. Hierdurch wird das Volumen der Brühkammer vergrößert und der Druck auf das Kaffeemehl in der Brühkammer verringert. Hierdurch wird wiederum - bei konstanter Pumpendrehzahl und konstant geöffnetem Brühventil 16 - der Wasservolumenstrom pro Zeiteinheit in der Brühkammer 6 größer.

Der zubereitete Kaffee wird durch das Auslassventil 18 in die Tasse 19 geleitet.

Der ausgepresste Kaffeekuchen wird sodann aus der Brühkammer 6 in einen Behälter entsorgt, und die Brühkammer 6 ist für eine neue Zubereitung startbereit.

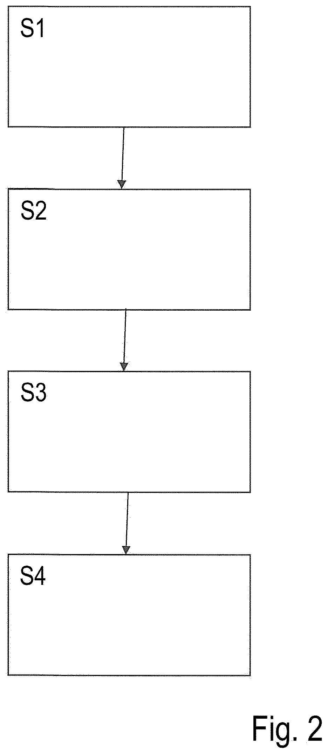

Fig. 2 zeigt ein Flussdiagramm eines Ausführungsbeispiels eines erfindungsgemäßen Verfahrens zum Zubereiten eines Kaffeegetränks mit der oben beschriebenen Kaffeemaschine.

Das bevorzugte Verfahren zum Zubereiten eines Kaffeegetränks weist danach zumindest folgende Schritte auf:
S1: In einem ersten Verfahrensschritt S1 wird eine vorgegebene Menge Kaffeemehl in die Brühkammer 6 geleitet.
S2: In einem zweiten Verfahrensschritt S2 wird ein Kaffeegetränk aus der zugeführten vorgegebenen Menge Kaffeemehls mittels eines Brühvorgangs in der Brühkammer 3 zubereitet. Dabei wird ein Volumenstrom, insbesondere der Volumenstrom des durch die Brühkammer fließenden Wassers, als Regelgröße ermittelt.
S3: Bei Abweichungen von einem vorgegebenen Volumenstromsollwert wird in einem dritten Verfahrensschritt S3 die Kolbenposition als Stellgröße derart regelnd verändert, dass der vorgegebene Volumenstromsollwert erreicht wird.

Die Schritte S2 und S3 werden kontinuierlich durchlaufen bzw. während des einzelnen Brühvorganges wiederholt, bis ein Volumenwert erreicht ist, der vorgegeben wurde und dem die Getränkezubereitung gestoppt wird

Die Erfindung ist nicht auf die oben beschriebenen Ausführungsbeispiele beschränkt, sondern sie ist im Rahmen der beigefügten Ansprüche modifizierbar.

So ist es denkbar, nach oder parallel zu einem Zubereitungsprozess das erstellte Kaffeekonzentrat mit frischem Kaltwasser aus dem Kaltwasserzulauf bis zu einer gewünschten Getränkemenge aufzufüllen.

### Bezugszeichenliste

- Kaffeemaschine: 1
- Brühzylinder: 2
- Kolben: 3
- Endfläche: 4, 5
- Brühkammer: 6
- Kaffeemehl: 7
- Mühle: 8
- Mühlenantrieb: 9
- Mahlgradverstellung: 10
- Kolbenantrieb: 11
- Wasserzuleitung: 12
- Heißwasserbereiter: 13
- Behälter: 14
- Pumpe: 15
- Brühventil: 16
- Auslassleitung: 17
- Auslassventil: 18
- Tasse: 19
- Messeinrichtung: 20
- Wegsensor: 21
- Steuerungseinrichtung: 22
- Benutzerinterface: 23

## Patentansprüche

1. Verfahren zum Erzeugen eines Kaffeegetränks aus Kaffeemehl mittels eines Brühvorganges an einer Kaffeemaschine mit einer Steuerungsvorrichtung (22) sowie mit einem Brühzylinder (2), in dem ein Kolben (3) beweglich angeordnet ist, der einen Kolbenantrieb (11) aufweist, so dass das Volumen einer Brühkammer (6) veränderlich ist, wobei der Brühvorgang zumindest folgende Verfahrensschritte aufweist:
S1: es wird eine Menge an Kaffeemehl (7) in die Brühkammer (6) eingefüllt;
S2: durch das in die Brühkammer (7) eingefüllte Kaffeemehl wird Wasser geleitet, um das Kaffeegetränk zuzubereiten, wobei ein Volumenstrom, insbesondere der Volumenstrom des durch die Brühkammer fließenden Wassers, als Regelgröße ermittelt und mit einem Volumenstromsollwert verglichen wird; und
S3: bei im Schritt S2 ermittelten Abweichungen von einem vorgegebenen Volumenstromsollwert wird die Position des Kolbens (3) in der Brühkammer als Stellgröße regelnd geändert, um den Volumenstrom auf den Volumenstromsollwert einzuregeln,
wobei die Schritte S2 und S3 während des Brühvorganges wiederholt durchlaufen werden.

2. Verfahren nach Anspruch 1, **dadurch gekennzeichnet, dass** in einem Schritt S4 bei einem Erreichen eines Sollvolumens an gebrühtem Kaffeegetränk der Brühvorgang beendet wird.

3. Verfahren nach Anspruch 1 oder 2, **dadurch gekennzeichnet, dass** der Volumenstromgrenzwert ein während des Brühvorgangs konstanter Wert ist und dass der Volumenstrom während des jeweiligen Brühvorganges konstant gehalten wird.

4. Verfahren nach Anspruch 1, 2 oder 3, **dadurch gekennzeichnet, dass** in einem Speicher der Steuerungsvorrichtung für verschiedene Kaffeegetränke verschiedene Zubereitungsprofil-Datensätze gespeichert sind, wobei zu den vorgespeicherten Daten jedes Datensatzes wenigstens jeweils ein vorgespeicherter Volumenstromsollwert gehört.

5. Verfahren nach einem der vorstehenden Ansprüche, **dadurch gekennzeichnet, dass** der Volumenstromsollwert rechnerisch aus Parametern des jeweiligen durchzuführenden Brühprozesses ermittelt wird.

6. Verfahren nach einem der vorstehenden Ansprüche, **dadurch gekennzeichnet, dass** in die Ermittlung des Volumenstromsollwertes als weitere Parameter der Mahlgrad und die Menge des in die Brühkammer gegebenen Kaffeemehls einbezogen werden

## Claims

1. Method of producing a coffee drink from coffee grinds by means of a brewing process at a coffee machine with a control device (22) as well as with a brewing cylinder (2) in which is movably arranged a piston (3) having a piston drive (11) so that the volume of a brewing chamber (6) is variable, wherein the brewing process comprises at least the following method steps:
S1: a quantity of coffee grinds (7) is introduced into the brewing chamber (6);
S2: water is conducted through the coffee grinds, which have been introduced into the brewing chamber (7), in order to prepare the coffee drink, wherein a volume flow, in particular the volume flow of the water flowing through the brewing chamber, is determined as regulating variable and compared with a volume flow target value; and
S3: in the case of differences detected in step S2 from a predetermined volume flow target value the position of the piston (3) in the brewing chamber is changed in regulated manner as setting variable so as to regulate the volume flow to the volume flow target value,
wherein the steps S2 and S3 are repeatedly run through during the brewing process.

2. Method according to claim 1, **characterised in that** in a step S4 the brewing process is ended on reaching a target volume of brewed coffee drink.

3. Method according to claim 1 or 2, **characterised in that** the volume flow limit value is a value which is constant during the brewing process and that the volume flow during the respective brewing process is kept constant.

4. Method according to claim 1, 2 or 3, **characterised in that** different preparation profile data sets for different coffee drinks are stored in a memory of the control device, wherein at least one respective pre-stored volume flow target value belongs to the pre-stored data of each data set.

5. Method according to any one of the preceding claims, **characterised in that** the volume flow target value is determined by computer from parameters of the respective brewing process to be carried out.

6. Method according to any one of the preceding claims, **characterised in that** the degree of grinding and the quantity of the coffee grinds charged into the brewing chamber are included as further parameters in the determination of the volume flow target value.

## Revendications

1. Procédé de préparation d'une boisson à base de café, à partir de mouture de café par un processus de percolation dans une machine à café équipée d'un dispositif de commande (22) ainsi que d'un cylindre de percolation (2) dans lequel est monté mobile un piston (3) qui comporte un entraînement (11), de façon à permettre de faire varier le volume d'une chambre de percolation (6), le processus de percolation comprenant au moins les étapes suivantes :
- S1 : une quantité de mouture de café (7) est introduite dans la chambre de percolation (6),
- S2 : de l'eau est introduite au travers de la mouture de café introduite dans la chambre de percolation (7) pour préparer la boisson à base de café, un débit volumétrique, en particulier le débit volumétrique de l'eau s'écoulant au travers de la chambre de percolation étant déterminé en tant que grandeur de régulation et comparé à une valeur de consigne du débit volumétrique,
- S3 : en présence d'écarts déterminés dans l'étape S2 par rapport à une valeur de consigne du débit volumétrique prédéfinie, la position du piston (3) dans la chambre de percolation est régulée en tant que grandeur de réglage pour réguler le débit volumétrique sur la valeur de consigne de ce débit,
- les étapes S2 et S3 étant mises en oeuvre de façon répétitive pendant le processus de percolation.

2. Procédé conforme à la revendication 1,
**caractérisé en ce que**
dans une étape S4, lorsqu'a été atteint un volume de consigne de boisson à base de café percolée, le procédé de percolation est achevé.

3. Procédé conforme à la revendication 1 ou 2,
**caractérisé en ce que**
la valeur limite du débit volumétrique est une valeur constante pendant le processus de percolation, et le débit volumétrique est maintenu constant pendant chaque processus de percolation.

4. Procédé conforme à la revendication 1, 2 ou 3,
**caractérisé en ce que**
plusieurs jeux de données de profils de préparation pour différentes boissons à base de café, sont enregistrés dans une mémoire du dispositif de commande, les données préenregistrées de chaque jeu de données comportant au moins respectivement une valeur de consigne du débit volumétrique enregistrée préalablement.

5. Procédé conforme à l'une des revendications précédentes,
**caractérisé en ce que**
la valeur de consigne du débit volumétrique est déterminée par calcul à partir de paramètres des procédés de percolation respectifs devant être mis en oeuvres.

6. Procédé conforme à l'une des revendications précédentes,
**caractérisé en ce que**
pour la détermination de la valeur de consigne du débit volumétrique, on utilise en tant qu'autres paramètres, le degré de broyage et la quantité de mouture de café présente dans la chambre de percolation.
